# EUROPÄISCHE PATENTANMELDUNG

(11) **EP 1 484 901 A1**
(43) Veröffentlichungstag der Anmeldung: **08.12.2004**
(21) Anmeldenummer: 03012762.5
(22) Anmeldetag: 05.06.2003
(51) Int. Cl.: H04M 1/21

(54) **Handy mit integriertem Feuerzeug und Flaschenöffner**

(71) Anmelder: Von Hirschberg, Lutz, Freiherr, 92637 Weiden i.d.O. (DE)
(72) Erfinder: Von Hirschberg, Lutz, Freiherr, 92637 Weiden i.d.O. (DE)

(57) **Zusammenfassung**

Ein übliches Handy bietet viele Zusatzfunktionen wie Uhr, Kalender, Terminplaner, Rechner, Wecker und andere mehr. Aufgabe der Erfindung ist die zusätzliche Integration der Funktionen von Feuerzeug und Flaschenöffner. Dies wird durch Integration eines Feuerzeuges und eines Flaschenöffners in das Handygehäuse erreicht, wobei Feuerzeug und Flaschenöffner fest eingebaut oder herausnehmbar sein können. Das Feuerzeug kann nachfüllbar sein, der Flaschenöffner kann starr oder einziehbar sein.

## Beschreibung

Die Erfindung bezieht sich auf Handys, wie sie heute als Mobiltelefone üblich sind.

Handys sind heute weitverbreitet und werden in verschiedenen Bauformen angeboten, versehen mit einer Vielzahl von Zusatzfunktionen wie Uhr, Kalender, Terminplaner, Rechner und Wecker, um nur einige zu nennen.

Der technische Fortschritt hat eine immer weitergehende Miniaturisierung der Mobiltelefone mit sich gebracht, verbunden mit geringerem Stromverbrauch und entsprechend kleineren Akkumulatoren, und hat damit die Integration diverser Zusatzfunktionen ermöglicht. Solche Handys werden heute von den meisten Menschen dauernd mitgeführt und ermöglichen den Verzicht auf zusätzlich mitzuführende Gegenstände, wie Kalender, Terminplaner, Rechner und Wecker. Handys dieser Art werden von allen bekannten Herstellern angeboten und sind über die einschlägigen Telefongesellschaften und Fachgeschäfte zu beziehen.

Gegenstand der Erfindung ist ein Handy der oben genannten Art, das um die Zusatzfunktionen Feuerzeug und Flaschenöffner erweitert ist und das Mitführen von diesen Gegenständen überflüssig macht.

Erfindungsgemäß wird dies bei einem Handy der oben genannten Art dadurch erreicht, daß ein Feuerzeug und ein Flaschenöffner in das Handygehäuse integriert wird, wobei das Feuerzeug mit einer Abdeckhaube versehen sein kann und der Flaschenöffner starr am Gehäuse oder in dieses einziehbar ist. Feuerzeug und Flaschenöffner können fest eingebaut oder von außen leicht auswechselbar sein. Das Feuerzeug soll von handelsüblicher Art sein. Es kann sich dabei um ein gas- oder benzinbetriebenes nachfüllbares oder ein Einweg-Feuerzeug handeln, das über die übliche Piezo- oder Reibradzündung verfügt.

Ein erfindungsgemäßes Handy bietet dem Benutzer den Vorteil, jederzeit ein Feuerzeug zur Hand zu haben, da heute nahezu jeder ständig ein Handy mit sich führt, ähnlich selbstverständlich, wie sonst nur Portemonnaie und Schlüsselbund, während Feuerzeuge oft in einer anderen Jacke, Mantel, Tasche oder im Auto liegen bleiben oder einfach verlorengehen. Auch Nichtraucher, die nur gelegentlich ein Feuerzeug benötigen, hätten dieses jederzeit verfügbar. Ein Flaschenöffner ist für viele ein häufig benötigtes Utensil, viele benutzen ein Feuerzeug in geeigneter Weise als Ersatz. Ein erfindungsgemäßes Handy erübrigt die Mitnahme von Feuerzeug und Flaschenöffner.

Im folgenden wird die Erfindung anhand eines Beispiels und mit Bezug auf die beiliegenden Zeichnungen näher erläutert, wobei
Abbildung 1 in Draufsicht ein erfindungsgemäßes Handy mit eingefahrenem Flaschenöffner zeigt, bei dem im unteren Gehäusebereich das Feuerzeug dargestellt ist,
Abbildung 2 in Draufsicht ein erfindungsgemäßes Handy mit ausgefahrenem Flaschenöffner zeigt,
Abbildung 3 in Seitenansicht ein erfindungsgemäßes Handy mit Feuerzeug und eingefahrenem Flaschenöffner zeigt, und
Abbildung 4 in Rückansicht ein erfindungsgemäßes Handy mit eingefahrenem Flaschenöffner zeigt.

Auf allen Abbildungen ist das Handy auf dem Kopf stehend dargestellt, da Feuerzeug und Flaschenöffner so sinnvoll zu benutzen sind.

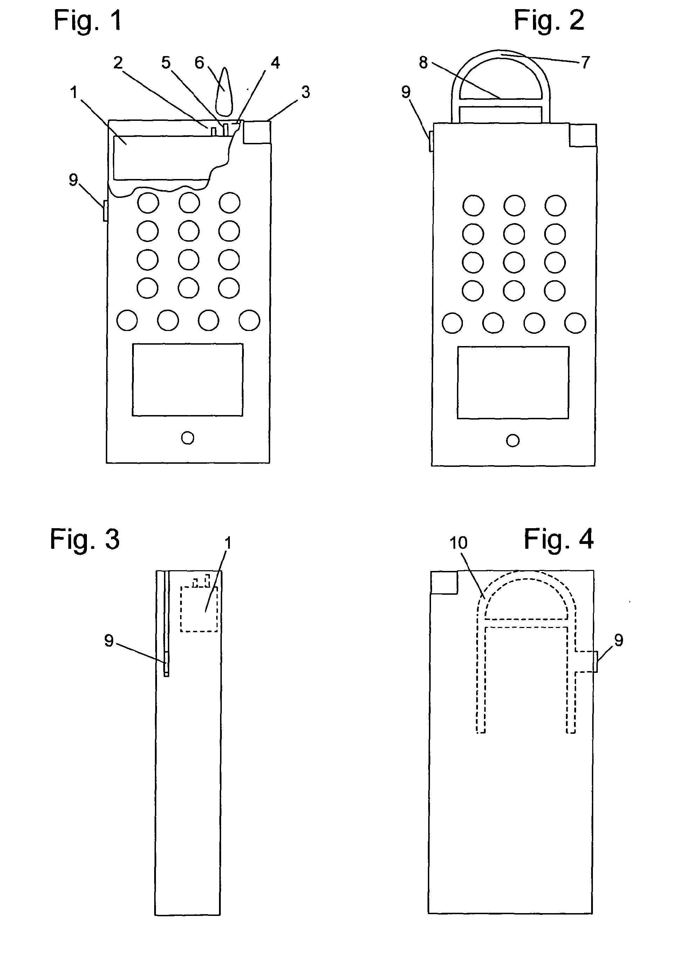

In Abbildung 1 ist das Handy mit im unteren Bereich aufgeschnittenem Gehäuse dargestellt. Der Tank 1 verfügt über einen Nachfüllstutzen 2 und eine Gasaustrittsdüse 5, wobei der Gasaustritt und dessen Zündung durch Herunterdrücken des Betätigungstasters 3 und den Zündkontakt 4 erfolgen und zur Flamme 6 führen. Es soll sich dabei um ein handelsübliches, nachfüllbares Gasfeuerzeug mit Piezozündung handeln, das fest in das Handygehäuse eingebaut ist. Der Flaschenöffner ist mittels des Schiebers 9 in das Gehäuse eingefahren.

In Abbildung 2 ist das Handy mit mittels des Schiebers 9 ausgefahrenem Flaschenöffner gezeigt, der über einen Auflagebügel 7 und einen Hebebügel 8 verfügt. Abbildung 3 zeigt in der Seitenansicht die Lage des Schiebers 9 bei eingefahrenem Flaschenöffner sowie die Lage des Tanks 1. In Abbildung 4 ist das Handy in der Rückansicht mit mittels des Schiebers 9 eingefahrenem Flaschenöffner 10 dargestellt.

## Patentansprüche

1. Handy zur mobilen Kommunikation, **gekennzeichnet durch** ein in das Gehäuse integriertes Feuerzeug, das fest eingebaut oder auswechselbar ist. Das Feuerzeug kann nachfüllbar oder als Einweggerät ausgelegt sein.

2. Handy gemäß Anspruch 1, **gekennzeichnet durch** einen in das Gehäuse integrierten Flaschenöffner, der fest eingebaut oder herausnehmbar ist. Der Flaschenöffner kann starr am Gehäuse oder in dieses einziehbar sein.
